# EUROPEAN PATENT SPECIFICATION

(11) **EP 2 812 159 B1**
(45) Date of publication and mention of the grant of the patent: **05.12.2018**
(21) Application number: 13716435.6
(22) Date of filing: 04.02.2013
(51) Int. Cl.: F16D 1/10, F16D 1/108, B25F 3/00

(54) **ADAPTER FOR THE QUICK COUPLING OF A DRIVE SHAFT TO A DRIVEN SHAFT**
ADAPTER ZUR SCHNELLKUPPLUNG EINER ANTRIEBSWELLE AN EINE ABTRIEBSWELLE
ADAPTATEUR PERMETTANT UN COUPLAGE RAPIDE D'UN ARBRE D'ENTRAÎNEMENT À UN ARBRE MENÉ

(30) Priority: 09.02.2012 IT CR20120002
(43) Date of publication of application: 17.12.2014
(73) Proprietor: Maus Italia S.P.A., 26010 Bagnolo Cremasco (CR) (IT)
(72) Inventor: AGOSTINO, Stefano, I-26013 Crema (CR) (IT)
(74) Representative: Marcio', Paola
(86) International application number: PCT/IT2013/000031
(87) International publication number: WO 2013/118155

(56) References cited:
- WO-A1-2011/160447
- US-A- 4 989 323

## Description

The invention relates to the field of mechanical engineering.

More in detail, the invention relates to an adapter with two-way quick coupling of female/female type for the quick coupling of a drive shaft to a driven shaft, wherein each shaft has a cylindrical body and a square head, for the transmission of a rotary motion.

For example, the adapter in question can be used for coupling a tube expander (driven shaft), used as a manual tool in the production of tube bundle heat exchangers, to a respective articulated telescopic shaft (drive shaft) connected to a motor, for the mechanical transmission of a rotary motion therebetween.

There are known connectors of this type comprising a central sleeve having a first and a second square female housing, adapted to contain respectively the square head of a drive shaft and that of a driven shaft. This square/square coupling enables the transmission of the rotary motion.

On the outer face of said sleeve two sliding rings are telescopically associated with each other, arranged with interposition of a coil spring, necessary for the quick connection and release operations of the adapter to and from the respective shafts.

Each connector also normally comprises two radial retaining means, with steel balls, adapted to cooperate reversibly with the sliding rings and with respective cavities provided on the shafts, to retain them during the transmission of the rotary motion and release them for separation thereof.

Conventional annular couplings have an evident limit and disadvantage, i.e. they operate poorly when reaching high rotation speeds.

The central sleeve for connection between the square heads of the two shafts does not ensure perfect coaxiality therebetween, due to the difficulty in producing two square housings of different section with the same axis, and therefore, damaging vibrations can be generated at high operating speeds, which are transmitted to the hand of the operator handling the tool provided with the driven shaft. Besides influencing the precision of machining, in the long term these vibrations cause physical damage to the operator.

US 4 989 323 A discloses a portable power unit for various power tools comprising a quick coupling element between a flexible drive shaft, actuated by a power unit, and the rigid driven shaft of the machine tool.

Said quick coupling comprises a sleeve, used as grip, having a first and a second square housing adapted to contain respectively the head of said drive shaft and of said driven shaft.

Said sleeve comprises, in proximity to the the driven shaft, one circular extension ring for the corresponding square housing, adapted to cooperate with the portion of cylindrical body proximal to the square head of said driven shafts, to achieve a reversible coupling system of the driven shaft to said sleeve.

Said quick coupling further comprises a ring, sliding on the outer face of said circular extension ring, associated with a coil spring, and radial retaining means, adapted to reversibly cooperate with a groove provided on said driven shaft, in correspondence of its circular cross section proximal to its square head, to retain said shaft during the transmission of said rotary motion and release them for separation thereof.

The invention intends to overcome these limits, by producing an adapter for the quick coupling of a drive shaft to a driven shaft which is precise, solid and efficient in use and easy and quick to mount.

These objects are achieved with an adapter for the quick coupling of a drive shaft provided with a grip to a driven shaft by means of two quick couplings of female/female type, wherein each shaft has a cylindrical body and a square head, for the transmission of a rotary motion, comprising:
- a sleeve having a first and a second square housing, adapted to contain respectively the head of said drive shaft and of said driven shaft;
- two rings sliding on the outer face of said sleeve, telescopically associated with each other with interposition of a coil spring;
- two radial retaining means, adapted to reversibly cooperate with said rings and respective cavities provided on said drive shaft and said driven shaft, to retain said shafts during the transmission of said rotary motion and release them for separation thereof,
characterized in that said sleeve comprises two circular extension rings for said first and second housing, adapted to cooperate with the portion of cylindrical body proximal to the square head of said drive shaft and of said driven shaft and said sleeve and said extension rings are arranged at the same side with respect to said grip of said drive shaft.

The adapter according to the invention has numerous advantages.

Said extension rings ensure that perfect coaxiality is achieved between the input drive shaft and the output driven shaft, and therefore with the pin of the tube expander, eliminating, also at high speeds, any vibration that could be transmitted to the hands of the operator.

The ease with which it is possible to machine and obtain the circular holes of the extension rings, which are therefore concentric with one another, ensures coaxiality between the two shafts, even if, owing to the difficulty of machining the two square housings of the adapter, these latter are not perfectly coaxial with each other.

In particular, the adapters according to the invention have been designed to be used advantageously in operations in which the speeds reached exceed 400 rpm.

The extension rings also enable the tube expander, and therefore the driven shaft, to be changed and replaced in very short times and with the maximum coupling precision, promoting the productivity of the whole system.

The advantages of the invention will be more evident below, in the description of a preferred embodiment, provided by way of non-limiting example, and with the aid of the drawings, wherein:

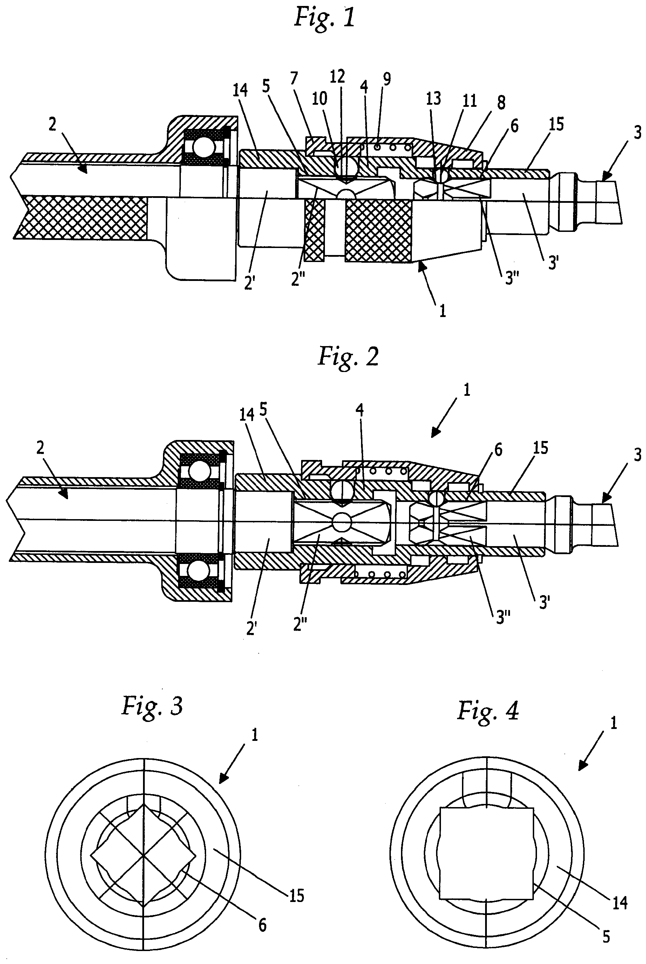

Figs. 1 and 2 represent, respectively in a partially sectional side view and in a longitudinal section, an adapter interposed between a drive shaft and a driven shaft according to the invention;
Figs. 3 and 4 represent, in an end view, the two ends of the adapter according to the invention.

With reference to the figures, there is illustrated an adapter 1 for quick coupling of a drive shaft 2 to a driven shaft 3, for the transmission of a rotary motion.

Said drive shaft 2 and said driven shaft 3 each have a cylindrical body 2' and 3' and a square coupling head 2" and 3".

On each square head 2" and 3" there are respectively obtained annular cavities 12 and 13.

Said adapter 1 comprises a sleeve 4 having a first 5 and a second 6 square housing adapted to contain respectively the head 2" and 3" of said drive shaft 2 and of said driven shaft 3, to obtain two quick couplings of female/female type.

Sliding on the outer face of said sleeve 4 are two rings 7 and 8, telescopically associated with each other with interposition of a coil spring 9.

Also comprised inside said connector 1 are annular retaining means 10 and 11, of the type with steel balls, adapted to reversibly cooperate with annular cavities 12 and 13 provided on the shafts, due to the thrust exerted by the position taken by the rings 7 and 8, according to the prior art in adapters of the type with two-way quick coupling.

In the embodiment illustrated in the figures, said sleeve 4 comprises two circular extension rings 14 and 15, adapted to cooperate with the portion of cylindrical body 2' and 3' proximal to the square head of the respective shaft 2 and 3.

Said circular extension rings 14 and 15 generally have a length of 15 mm, but in alternative embodiments they can have a length between 10 mm and 25 mm, according to the dimensions of the adapter 1.

The dimensional tolerances between the parts are important, which must be designed and produced accurately to ensure maximum coaxiality between the extension rings, to enable the elimination of clearances and vibrations between the moving shafts.

By way of non-limiting example, particularly satisfactory results were achieved when:
- the drive shaft 2, with respect to an established diameter, has a tolerance between -0.01 and -0.04 mm;
- the driven shaft 3 has a tolerance variable according to the diameter of the ground bars available on the market, and can have values between -0 and -0.036 mm, or between -0 and -0.043 mm, or between -0 and -0.052 mm;
- the extension 14 of the first input housing 5, i.e. on the side of the drive shaft 2, must have a tolerance of its circular inner section preferably between +0.05 and + 0.1 mm;
- the extension 15 of the second output housing 6, i.e. on the side of the driven shaft 3, must have a tolerance of its circular inner section preferably between +0.01 and + 0.04 mm.

Those skilled in the art can easily select the best tolerances according to the dimensions of the components in play, reaching the same result.

The applications of the adapter 1 according to the invention are the same as conventional adapters with two-way quick couplings, save for the fact that, due to the circular extensions 14 and 15, they are able to operate at very high speeds, eliminating all vibration transmitted to the hands of the operator.

## Claims

1. An adapter (1) for the quick coupling of a drive shaft (2) to a driven shaft (3) by means of two quick couplings of female/female type, wherein each shaft has a cylindrical body (2', 3') and square head (2", 3"), for the transmission of a rotary motion, comprising:
- a sleeve (4) having a first (5) and a second (6) square housing adapted to contain respectively the head (2", 3") of said drive shaft (2) and of said driven shaft (3);
- two rings (7, 8) sliding on the outer face of said sleeve (4), telescopically associated with each other with interposition of a coil spring (9);
- two radial retaining means (10, 11) in said first and second square housing (5, 6), adapted to reversibly cooperate with said rings (7, 8) and respective cavities (12, 13) provided on said drive shaft (2) and said driven shaft (3), to retain said shafts during the transmission of said rotary motion and release them for separation thereof,
**characterized in that** said sleeve (4) comprises two circular extension rings (14, 15) on said first (5) and second (6) square housing, adapted to cooperate with the portion of cylindrical body (2', 3') proximal to the square head of said drive shaft (2) and of said driven shaft (3).

## Patentansprüche

1. Ein Adapter (1) zur Schnellkupplung einer Antriebswelle (2) mit einer angetriebenen Welle (3) mithilfe von zwei Schnellkupplungen des Nut/Nut-Typs, wobei jede Welle einen zylinderförmigen Körper (2', 3') und einen Vierkantkopf (2", 3") für die Übertragung einer Rotationsbewegung aufweist, umfassend:
- eine Hülse (4) mit einem ersten (5) und einem zweiten (6) viereckigen Gehäuse, geeignet um den Kopf (2", 3") der besagten Antriebswelle (2), beziehungsweise der besagten angetriebenen Welle (3) zu enthalten;
- zwei Ringe (7, 8), die auf der Außenseite der besagten Hülse (4) gleiten, die teleskopisch miteinander mit Zwischenschaltung einer Spiralfeder (9) verbunden sind;
- zwei strahlenförmige Haltemittel (10, 11) in besagtem ersten und zweiten viereckigen Gehäuse (5, 6), geeignet, um reversibel mit besagten Ringen (7, 8) und entsprechenden Hohlräumen (12, 13) zusammenzuarbeiten, die auf besagter Antriebswelle (2) und besagter angetriebenen Welle (3) vorgesehen sind, um besagte Wellen während der Übertragung der besagten Rotationsbewegung festzuhalten und sie für ihre Trennung freizulassen,
**dadurch gekennzeichnet, dass** besagte Hülse (4) zwei kreisförmige Ringerweiterungen (14, 15) auf besagtem ersten (5) und zweiten (6) viereckigen Gehäuse umfasst, geeignet, um mit dem Teil des zylinderförmigen Körpers (2', 3') in der Nähe des Vierkantkopfes der besagten Antriebswelle (2) und der besagten angetriebenen Welle (3) zusammenzuarbeiten.

## Revendications

1. Un adaptateur (1) pour le couplage rapide d'un arbre d'entraînement (2) à un arbre mené (3) au moyen de deux raccords de type femelle/femelle, où chaque arbre possède un corps cylindrique (2', 3') et une tête carrée (2", 3"), pour la transmission d'un mouvement rotatif, comprenant :
- un manchon (4) ayant un premier (5) et un second (6) logement carré pour contenir respectivement la tête (2", 3") dudit arbre d'entraînement (2) et dudit arbre mené (3) ;
- deux bagues (7, 8) coulissant sur la face extérieure dudit manchon (4), associées de manière télescopique l'une avec l'autre avec interposition d'un ressort hélicoïdal (9) ;
- deux moyens de retenue radiale (10, 11) dans lesdits premier et second logements carrés (5, 6), prévu pour coopérer de manière réversible avec lesdites bagues (7, 8) et les cavités respectives (12, 13) prévue sur ledit arbre d'entraînement (2) et ledit arbre mené (3), pour retenir lesdits arbres durant la transmission dudit mouvement rotatif et les libérer pour la séparation de ces derniers,
**caractérisé par le fait que** ledit manchon (4) comprend deux bagues de rallonge circulaires (14, 15) sur lesdits premier (5) et seconde (6) logements carrés, prévues pour coopérer avec la portion de corps cylindrique (2', 3') à proximité de la tête carrée dudit arbre d'entraînement (2) et dudit arbre mené (3).
